(19) Europäisches Patentamt
European Patent Office
Office européen des brevets

(11) Publication number: 0 044 718
B1

(12) **EUROPEAN PATENT SPECIFICATION**

(45) Date of publication of patent specification: **13.11.85**

(51) Int. Cl.$^4$: **C 07 C 71/00**, C 07 D 319/08, C 07 D 319/20, A 01 N 53/00

(21) Application number: **81303282.8**

(22) Date of filing: **16.07.81**

(54) **Pesticidal pentafluorobenzyl esters of cycloalkyl carboxylic acids.**

(30) Priority: **18.07.80 AU 4608/80**

(43) Date of publication of application:
**27.01.82 Bulletin 82/04**

(45) Publication of the grant of the patent:
**13.11.85 Bulletin 85/46**

(84) Designated Contracting States:
**CH DE FR GB IT LI NL**

(56) References cited:
**EP-A-0 001 566**
**EP-A-0 002 620**
**US-A-4 277 490**

(73) Proprietor: **COMMONWEALTH SCIENTIFIC AND INDUSTRIAL RESEARCH ORGANIZATION**
**Limestone Avenue**
**Campbell Australian Capital Territory 2601 (AU)**

(72) Inventor: **Holan, George**
**86 Were Street**
**Brighton Victoria (AU)**
Inventor: **O'Keefe, David Francis**
**13 Oakern Street**
**Mt. Waverley Victoria (AU)**

(74) Representative: **Lawrence, Peter Robin Broughton et al**
**GILL JENNINGS & EVERY 53-64 Chancery Lane**
**London WC2A 1HN (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 718 B1

**Description**

This invention relates to new pesticidal compounds, methods of preparing these compounds and to pesticidal compositions containing the compounds.

Throughout this specification, where the context permits, the word "pest" is used to include not only true insects but also nematodes and other pests such as spiders and mites which are not classed as insects in the strict biological sense but which are often referred to as insects and are embraced by the term "insects" herein. Thus the term "pests" implies reference not only to those small invertebrate animals belonging mostly to the class *Insecta*, comprising six-legged, usually winged forms, such as bettles, bugs, flies and the like, but also to other allied classes of arthropods whose members are wingless and usually have more than six legs, such as spiders, wood lice and the like, and especially to the other *Acaridea* which includes the mites and ticks. The words "pesticide" and "pesticidal" are similarly used.

The novel compounds are pentafluorobenzyl esters of certain substituted cyclopropane and cyclobutane carboxylic acids. Other esters of these or other cycloalkyl acids are known, for instance from our European Patent Specification 2620 and our Australian Patent No. 502,950 and our US Patent No. 4277490. In European Patent Specification 9709 Bayer A.G. describe insecticidally active pentafluorobenzyl esters of 2,2-dimethyl-3-(subsituted vinyl or cycloalkylidenemethyl)cyclopropane carboxylic acids.

The novel compounds of the invention have the general formula I

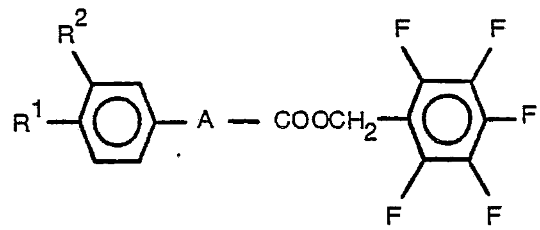

(I)

wherein

$R^1$ is a halo group; or a lower alkyl, lower alkoxy or lower alkylthio group, each of which may be substituted with one or more halo groups;

$R^2$ is hydrogen or a methyl group; or $R^1$ and $R^2$ together form a methylenedioxy, or a difluoromethylenedioxy group or, with the carbon atoms to which they are attached, an aromatic ring; and

A is one of the groups X or Y

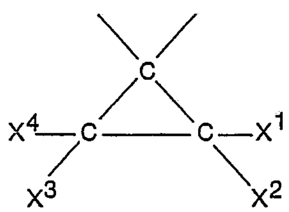

(X)

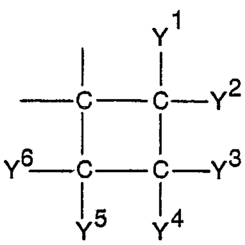

(Y)

wherein

$X^1$ and $X^2$ are the same or different and each is hydrogen or a fluoro, chloro, bromo or methyl group, with the proviso that if $X^1$ is a fluoro group, then $X^2$ should not be a bromo group; and $X^3$ and $X^4$ are the same or different and each is hydrogen or a fluoro group; and $Y^1$, $Y^2$, $Y^3$, $Y^4$, $Y^5$ and $Y^6$ are the same or different groups and each is hydrogen or a fluoro, bromo, chloro, or methyl group, and wherein at least one of the groups $Y^1$—$Y^6$ is fluoro.

The compounds have pesticidal activity. Pesticidal compositions contain one or more of the compounds and a diluent or carrier.

As used herein "halo" means fluoro, chloro or bromo; "lower" implies alkyl groups having from 1 to 4 carbon atoms. Alkyl groups having more than 2 carbon atoms may be straight or branched.

It is generally preferred that $R^1$ is chloro or ethoxy and $R^2$ is hydrogen. Often at least one of the groups $Y^1$—$Y^6$ and $X^1$—$X^4$ are fluoro and any that are not fluoro are hydrogen. Often two are hydrogen and the remainder are fluoro.

One preferred group of compounds are those in which A is the group Y and $Y^1$, $Y^2$, $Y^3$ and $Y^4$ are each fluoro and $Y^5$ and $Y^6$ are hydrogen. Another preferred group are those in which A is the group X, $X^1$ and $X^2$ are fluoro and $X^3$ and $X^4$ are hydrogen.

The compounds of formula I are optically active and can be resolved into their optical isomers by conventional methods. The invention thus includes the individual (+) and (−) isomers of the compounds as well as the racemic (±) forms.

Compounds of particular interest include 1(4-ethoxyphenyl)-2,2,3,3-tetrafluorocyclobutane carboxylic acid 2′, 3′, 4′, 5′, 6′-pentafluorobenzyl ester, 1-(4-ethoxyphenyl)-2,2-difluorocyclopropane carboxylic acid 2′, 3′, 4′, 5′, 6′-pentafluorobenzyl ester and R(-)-1(4-chlorophenyl)-2,2,3,3-tetrafluoro cyclobutane carboxylic acid 2′, 3′, 4′, 5′, 6′-pentafluorobenzyl ester.

The compounds of the invention are related to the synthetic pyrethroid type of insecticide, such as Permethrin, which are 2,2-dimethylcyclopropanes with the large substituents on the 1 and 3 positions of the cyclopropane ring. The compounds of the present invention have both large substituents on the 1 position of the cyclopropane ring. These 1,1-substituted-cyclopropane esters are generally superior in pesticidal activity to the 1,3-substituted cyclopropane esters of the prior art.

The compounds of the present invention can be prepared

(a) by the reaction of the appropriate acid (formula (II)

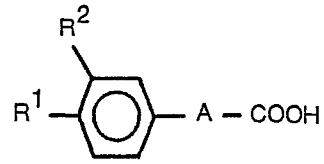

(II)

(wherein $R^1$, $R^2$ and A are as defined above) with pentafluorobenzyl bromide in an inert solvent and in the presence of a phase transfer catalyst, preferably a crown ether, and a basic alkali metal salt;

(b) by reaction of an alkali metal salt of the acid (II) with pentafluorobenzyl bromide in an aprotic solvent, such as DMF, DMSO or ethylene glycol dimethyl ether;

(c) by reaction of the acid (II) or a suitable reactive derivative thereof, such as the acid chloride, with pentafluorobenzylalcohol, in an inert solvent and in the presence of a base catalyst, such as pyridine.

All of the above reactions may be performed at atmospheric pressure and at temperatures in the range 0 to 100°C.

Preparations of the acids of formula II are described in our aforementioned Patent and Patent Applications.

The new compounds described herein may be dissolved in a suitable organic solvent, or mixture of solvents, to form solutions or brought into aqueous suspension by dispersing organic solvent solutions of the compounds in water, to provide useful liquid compositions, which may be incorporated, for example, into aerosol-type dispersions with the usual propellants.

The compounds may also be incorporated in solid compositions which may include inert solid diluents or carriers, to form useful solid compositions. Such compositions may also include other substances such as wetting, dispersing or sticking agents, and may be prepared in granular or other forms to provide slow release of the compounds over an extended period of time. The compounds may be employed in such compositions either as the sole toxic agent or in combination with other insecticides such as pyrethrum, rotenone, or with fungicidal or bactericidal agents, to provide compositions useful for household and agricultural dusts and sprays, textile coating and impregnation, and the like.

In particular, the compounds of the invention may be advantageously combined with other substances which have a synergistic or potentiating action. Generally such substances are of the class of microsomal oxidase inhibitors i.e., they inhibit the detoxification of insecticides in insects produced by the action of oxidative enzymes. Typical substances of this type are the pyrethrin synergists of which the following are examples:—

| Common Name | Chemical Name |
|---|---|
| Piperonyl butoxide | α[2-(2-butoxyethoxy)ethoxy]-4,5-methylenedioxy-2-propyl-toluene |
| Piperonyl cyclonene | 3-hexyl-5(3,4-methylenedioxy-phenyl)-2-cyclohexanone |
| "Sesoxane" (Sesamex) | 2-(3,4-methylenedioxy-phenoxy)-3,6,9-trioxaundecane |
| "Sulfoxide" | 1,2-(methylenedioxy)-4-[2-(octylsulfinyl)propyl]-benzene |
| n-Propyl isome | dipropyl-5,6,7,8-tetrahydro-7-methylnaphtho-[2,3-d], 3-dioxole-5,6-dicarboxylate |

("Sesoxane", "Sesamex" and "Sulphoxide" are Registerd Trade Marks).

Piperonyl butoxide is particularly useful as a potentiator. The amount of piperonyl butoxide used may vary from 1/1000th to fifty times the weight of the compound I the preferred range being from about 1/100th to an equal part by weight. 'Sesoxane' (made by Shulton Inc., Clifton, N.J., U.S.A.) also is a useful potentiator in similar amounts.

In general, the compositions of the invention will contain from 0.5 to 95% by weight of the active substance, i.e., the compound(s) of formula I and the synergist or potentiator, if used. The broad composition ranges of various possible formulations are as follows:

| Formulation type | Active Substance | Diluents |
|---|---|---|
| Emulsifiable concentrate | 5—95% | 95—5% |
| Wettable Powder | 5—95% | 95—5% |
| Granulate | 1—20% | 99—80% |
| Dust | 1—20% | 99—80% |
| ULV Spray | 50—95% | 5—50% |
| Aerosol | 0.5—30% | 99.5—70% |

Examples of formulations in accordance with the invention are as follows: (parts are by weight):

Dusts:

The following substances are used to produce (a) a 5% dust and (b) a 2% dust:

(a) 5 parts of active substance, 95 parts of talcum;

(b) 2 parts of active substance, 1 part of highly dispersed silicic acid, 97 parts of talcum.

The active substance is mixed and ground with the carriers.

Granulate

The following ingredients are used to produce a 5% granulate:

5 parts of active substance

0.25 part of epichlorohydrin,

0.25 parts of cetyl polyglycol ether,

3.50 parts of polyethylene glycol,

91 parts of kaolin.

The active subtance is mixed with epichlorohydrin and dissolved with 6 parts of acetone, the polyethylene glycol and cetyl polyglycol ether are then added. The solution obtained is sprayed onto kaolin and the acetone is evaporated off in vacuo.

Wettable powder

The following constituents are used to produce (a) a 40%, (b) and (c) a 25%, and (d) a 10% wettable powder:

(a) 40 parts of active substance,
5 parts of sodium lignin sulphonate,
1 part of sodium dibutyl-naphthalene sulphonate,
54 parts of silicic acid;

(b) 25 parts of active substance,
4.5 parts of calcium lignin sulphonate,
1.9 parts of chalk/hydroxyethyl cellulose mixture (1:1),
1.5 parts of sodium dibutyl-naphthalene sulphonate,
19.5 parts of silicic acid,
19.5 parts of chalk,
28.1 parts of kaolin;

(c) 25 parts of active substance,
2.5 parts of isooctylphenoxy-polyoxyethyleneethanol,
1.7 parts of chalk/hydroxyethyl cellulose mixture (1:1),
8.3 parts of sodium aluminium silicate,
16.5 parts of kieselguhr,
46 parts of kaolin;

(d) 10 parts of active substance,
3 parts of a mixture of the sodium salts of saturated fatty alcohol sulphates,
5 parts of naphthalenesulphonic acid/formaldehyde condensate,
82 parts of kaolin.

The active substance is intimately mixed in suitable mixers with the additives, and the mixture is then ground in the appropriate mills and rollers to obtain wettable powders which can be diluted with water to give suspensions of the desired concentration.

Emulsifiable Concentrates

The following substances are used to produce (a) a 10%, (b) a 25%, and (c) a 50% emulsifiable concentrate:

(a) 10 parts of active substance,
3.4 parts of epoxidised vegetable oil,
3.4 parts of a combination emulsifier consisting of fatty alcohol polyglycol ether and alkylarylsulphonate calcium salt,
40 parts of dimethylformamide,
43.2 parts of xylene;

(b) 25 parts of active substance,
2.5 parts of epoxidised vegetable oil,
10 parts of alkylarylsulphonate/fatty alcohol polyglycol ether mixture,
5 parts of dimethylformamide,
57.5 parts of xylene;

(c) 50 parts of active substance,
4.2 parts of tributylphenol-polyglycol ether,
5.8 parts of calcium-dodecylbenzenesulphonate,
20 parts of cyclohexanone,
20 parts of xylene.

Emulsions of the required concentration can be prepared from these concentrates by dilution with water.

Spray

The following constituents are used to produce (a) a 5% spray and (b) a 95% spray;

(a) 5 parts of active substance,
1 part of epichlorohydrin,
94 parts of ligroin (boiling limits 160°—190°C);

(b) 95 parts of active substance,
5 parts of epichlorohydrin.

The preparation and properties of the compounds of the invention as illustrated by the following examples.

Example 1

1(4-Ethoxyphenyl)-2,2,3,3-tetrafluorocyclobutane carboxylic acid 2',3',4',5',6'-pentafluorobenzyl ester

To a stirred suspension of powdered anhydrous potassium carbonate (0.5 g, 7.24 mM) in dry benzene (250 ml) was added 18-Crown-6 (0.5 g, 1.89 mM), pentafluorobenzyl bromide (1.0 g, 3.83 mM) and 1(4-ethoxyphenyl)-2,2,3,3-tetrafluorocyclobutane carboxylic acid (1.0 g, 3.42 mM). The mixture was stirred at 40—45°C for 4 hours then added to ice water. The organic layer was separated, washed with 2 M sodium hydroxide solution and water then dried over anhydrous sodium sulphate. The solution was filtered through a short column of silica gel then the solvent was evaporated and the residue dried at 60°C/0.1 torr for 1 hour to give the ester as a colourless oil 1.54 g (95%).

Analysis: Found C 51.09%, H, 2.90%, F 36.3%; $C_{20}H_{13}F_9O_3$
requires C 50.86%, H 2.77%, F 36.2%.

Example 2

1-(4-Ethoxyphenyl)-2,2-difluorocyclopropane carboxylic acid 2',3',4',5',6'-pentafluorobenzyl ester

To a solution of 1-(4-ethoxyphenyl)-2,2-difluorocyclopropane carboxylic acid (0.47 g) in dry benzene (140 ml) was added pentafluorobenzyl bromide (0.60 g), 18-Crown-6 (0.3 g) and anhydrous potassium carbonate (0.3 g). The mixture was stirred at 40—45°C for3 hours then washed with water, dried over anhydrous sodium sulphate and the solvent removed in vacuo. The residue was dissolved in dichloromethane and percolated through a short column of silica gel. The residue after evaporation of solvent was crystallised from diethyl ether/hexane to give the crystals m.p. 68—9°C; yield 0.75 g (92%).

Analysis: Found C 54.12%, H 3.05%, F 31.4%, $C_{19}H_{13}F_7O_3$
requires C 54.04%, H 3.10%, F 31.49%.

Example 3

R(-)1-(4-Chlorophenyl)-2,2,3,3-tetrafluorocyclobutane carboxylic acid 2',3',4',5',6'-pentafluorobenzyl ester

To a stirred suspension of powdered anhydrous potassium carbonate (0.5 g, 7.24 mM) in dry benzene (250 ml) was added 18-Crown-6 (0.5 g, 1.89 mM), pentafluorobenzyl bromide (1.0 g, 3.83 mM) and 1(4-chlorophenyl)-2,2,3,3-tetrafluorocyclobutane carboxylic acid (1.0 g, 3.54 mM). The mixture was stirred at 40—45°C for 4 hours then added to ice water. The organic layer was separated, washed with 2 M sodium hydroxide solution and water then dried over anhydrous sodium sulphate. The solution was filtered through a short column of silica gel then the solvent was evaporated and the residue dried at 60°C/0.1 torr for 1 hour to give the ester as a colourless oil 1.54 g (95%).

Analysis; Found C 47.02%, H 1.86%, Cl 7.7%, F 37.2%; $C_{18}H_8ClF_9O_2$
requires C 46.73%, H 1.74%, Cl 7.66%, F 37.0%.

Example 4

Insecticidal Activity

Insecticidal activity was investigated against blowfly *Lucilia cuprina.* The method used was as follows:—

(a) The compounds were tested for activity against a dieldrin susceptible strain (BLL) which had been collected before dieldrin usage in the field.

The test compound was applied in acetone solution, 0.5 µl dispensed with a Drummond micropipette to the dorsum of the thorax of 2—3 day old females. Adult flies were fed on water and sugar-only and maintained at 25°C and 60—70% RH. The mortalities were determined after 24 hours. Moribund flies were regarded as dead. The $LD_{50}$ values, in terms of concentration, were interpolated from a probit/log dose graph using a computer program.

(b) Potentiation

The compound was also tested on the insects described above in conjunction with the potentiator piperonyl butoxide by pretreating each insect with 1 µl of a 2% solution of the potentiator in acetone.

The mortalities were counted at 48 hours after treatment and compared with acetone and acetone/potentiator controls.

The $LD_{50}$ value was determined as described above.

About the same levels of potentiation were obtained when piperonyl butoxide was replaced by an equal amount of 'Sesoxane'.

The insecticidal activity ($LD_{50}$) of the compound of Example 1, measured as described above, was 0.8 µg/female insect. When potentiated with 1 µl of a 2% solution of piperonyl butoxide as a pretreatment on each insect the $LD_{50}$ was 0.01 µg/female insect.

The insecticidal activity ($LD_{50}$) of the compound of Example 2, measured as described above, was 0.038 µg/female insect. When potentiated with piperonyl butoxide as a pretreatment the $LD_{50}$ was 0.014 µg/female insect.

The insecticidal activity ($LD_{50}$ of the compound of Example 3, measured as described above, was 0.05 µg/female insect. When potentiated with piperonyl butoxide as a pretreatment the $LD_{50}$ was 0.01 µg/female insect.

**Claims**

1. A compound of the general formula (I)

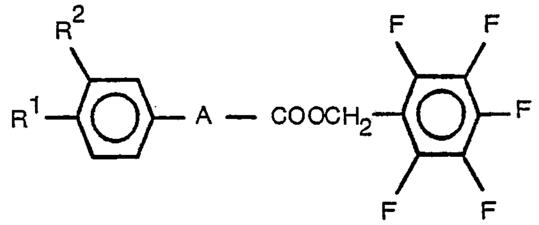

(I)

in which

$R^1$ is a halo group; or a lower alkyl, lower alkoxy or lower alkylthio group, each of which may be substituted with one or more halo groups;

$R^2$ is hydrogen or a methyl group; or $R^1$ and $R^2$ together form a methylenedioxy, or a difluoromethylenedioxy group or, with the carbon atoms to which they are attached, an aromatic ring; and

A is one of the groups X or Y

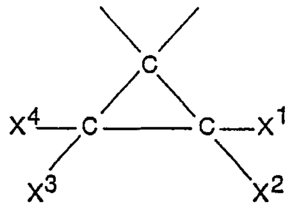

(X)

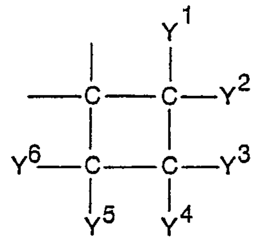

(Y)

wherein

$X^1$ and $X^2$ are the same or different and each is hydrogen or a fluoro, chloro, bromo or methyl group, with the proviso that if $X^1$ is a fluoro group, then $X^2$ should not be a bromo group; and $X^3$ and $X^4$ are the same or different and each is hydrogen or a fluoro group; and $Y^1$, $Y^2$, $Y^3$, $Y^4$, $Y^5$ and $Y^6$ are the same or different groups and each is hydrogen or a fluoro, bromo, chloro, or methyl group, and wherein at least one of the groups $Y^1$—$Y^6$is fluoro.

2. A compound according to claim 1 characterised in that at least one of the groups $X^1$—$X^4$ and $Y^1$—$Y^6$ is fluoro and the remainder are hydrogen or fluoro.

3. A compound as claimed in claim 1, characterised in that A is the group Y and $Y^1$, $Y^2$, $Y^3$ and $Y^4$ are each fluoro and $Y^5$ and $Y^6$ are hydrogen.

4. A compound as claimed in claim 1 characterised in that A is the group X, $X^1$ and $X^2$ are fluoro and $X^3$ and $X^4$ are hydrogen.

5. A compound as claimed in any one of claims 1 to 4, characterised in that $R^1$ is chloro or ethoxy and $R^2$ is hydrogen.

6. 1(4-Ethoxyphenyl)-2,2,3,3,-tetrafluorocyclobutane carboxylic acid 2',3',4',5',6'-pentafluorobenzyl ester.

7. 1-(4-Ethoxyphenyl)-2,2-difluorocyclopropane carboxylic acid 2',3',4',5',6'-pentafluorobenzyl ester.

8. R(-)-1(4-Chlorophenyl)-2,2,3,3-tetrafluorocyclobutane carboxylic acid 2',3',4',5',6'-pentafluorobenzyl ester.

9. A method for the preparation of a compound as claimed in any preceding claim characterised in that an acid of the formula (II)

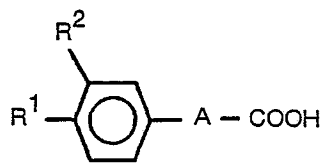

(II)

or a salt or a reactive derivative thereof (wherein $R^1$, $R^2$ and A are as defined in claim 1) is reacted with

(a) pentafluorobenzyl bromide, preferably in an inert solvent and in the presence of a phase transfer catalyst and a basic alkali metal salt, the catalyst preferably being a crown ether and the reaction preferably being between an alkali metal salt of the acid of formula (II) and pentafluorobenzyl bromide in an aprotic solvent, or

(b) pentafluorobenzyl alcohol, preferably in an inert solvent and in the presence of a base catalyst.

10. A pesticidal composition, characterised in that it comprises at least one compound as claimed in any of claims 1 to 8 and an inert liquid or solid carrier.

11. A pesticidal composition as claimed in claim 10 characterised in that it additionally contains at least one synergistic or potentiating agent of the class of microsomal oxidase inhibitors, preferably a pyrethrin synergist.

12. A method for combatting pests, by applying a pesticidally effective amount of a compound to the pests and/or their locus, characterised in that the compound is a compound as claimed in any of claims 1 to 8 optionally in the form of a composition as claimed in claim 10 or claim 11.

**Patentansprüche**

1. Eine Verbindung der allgemeinen Formel (I)

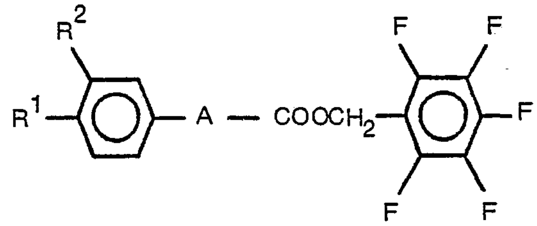

(I)

in welcher

$R^1$ eine Halogengruppe oder eine niedrige Alkyl-, niedrige Alkoxy- oder niedrige Alkylthiogruppe ist, die jeweils mit einer oder mehreren Halogengruppen substituiert sein kann;

$R^2$ Wasserstoff oder eine Methylgruppe ist; oder $R^1$ und $R^2$ bilden zusammen eine Methylendioxy- oder eine Difluormethylendioxygruppe oder — mit den Kohlenstoffatomen, an die sie gebunden sind — einen aromatischen Ring; und

A ist eine der Gruppen X oder Y

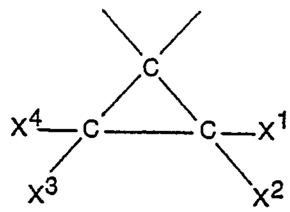

(X)

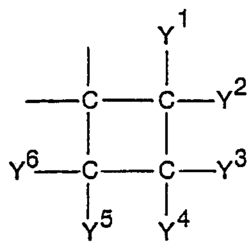

(Y)

worin

$X^1$ und $X^2$ gleich oder verschieden und jeweils Wasserstoff oder eine Fluor-, Chlor-, Brom- oder Methylgruppe sind, mit der Bedingung, daß, wenn $X^1$ eine Fluorgruppe ist, $X^2$ keine Bromgruppe sein sollte; und $X^3$ und $X^4$ gleich oder verschieden und jeweils Wasserstoff oder eine Fluorgruppe sind; und $Y^1$, $Y^2$, $Y^3$, $Y^4$, $Y^5$ und $Y^6$ gleich oder verschiedene Gruppen und jeweils Wasserstoff oder eine Fluor-, Brom-, Chlor- oder Methylgruppe sind, und worin mindestens eine der Gruppen $Y^1$ bis $Y^6$ Fluor ist.

2. Eine Verbindung nach Anspruch 1, dadurch gekennzeichnet, daß mindestens eine der Gruppen $X^1$ bis $X^4$ und $Y^1$ bis $Y^6$ Fluor und der Rest Wasserstoff oder Fluor ist.

3. Eine Verbindung nach Anspruch 1, dadurch gekennzeichnet, daß A die Gruppe Y ist und $Y^1$, $Y^2$, $Y^3$ und $Y^4$ jeweils Fluor und $Y^5$ und $Y^6$ Wasserstoff sind.

4. Eine Verbindung nach Anspruch 1, dadurch gekennzeichnet, daß A die Gruppe X ist, $X^1$ und $X^2$ Fluor und $X^3$ und $X^4$ Wasserstoff sind.

5. Eine Verbindung nach einem der Ansprüche 1 bis 4, dadurch gekennzeichnet, daß $R^1$ Chlor oder Ethoxy und $R^2$ Wasserstoff ist.

6. 1-(4-Ethoxyphenyl)-2,2,3,3-tetrafluorcyclobutancarbonsäure-2',3',4',5',6'-pentafluorbenzylester.

7. 1-(4-Ethoxyphenyl)-2,2-difluorcyclopropancarbonsäure-2',3',4',5',6'-pentafluorbenzylester.

8. R(-)-1-(4-Chlorphenyl)-2,2,3,3-tetrafluorcyclobutancarbonsäure-2',3',4',5',6'-pentafluorbenzylester.

9. Verfahren zur Herstellung einer Verbindung nach einem der vorhergehenden Ansprüche, dadurch gekennzeichnet, daß eine Säure der Formel (II)

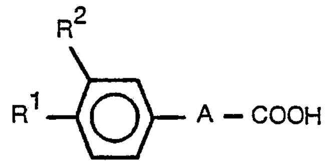

(II)

oder ein Salz oder ein reaktionsfähiges Derivat derselben (worin $R^1$, $R^2$ und A wie in Anspruch 1 definiert sind) mit

(a) Pentafluorbenzylbromid, vorzugweise in einem inerten Lösungsmittel und in Anwesenheit eines Phasenübertragungskatalysators und eines basischen Alkalimetallsalzes, wobei der Katalysator vorzugsweise eine Kronenether ist und die Reaktion vorzugsweise zwischen einem Alkalimetallsalz der Säure der Formel (II) und Pentafluorbenzylbromid in einem aprotischen Lösungsmittel stattfindet, oder

(b) Pentafluorbenzylalkohol, vorzugsweise in einem inerten Lösungsmittel und in Anwesenheit eines basischen Katalysators, umgesetzt wird.

10. Pestizide Zusammensetzung, dadurch gekennzeichnet, daß sie mindestens eine Verbindung nach einem der Ansprüche 1 bis 8 und einen inerten flüssigen oder festen Träger enthält.

11. Pestizide Zusammensetzung nach Anspruch 10, dadurch gekennzeichnet, daß sie zusätzlich mindestens ein synergistisches oder potenzierendes Mittel der Klasse mikrosomaler Oxidasehemmer, vorzugsweise einen Pyrethrinsynergisten, enthält.

12. Verfahren zur Schädlingsbekämpfung durch Aufbringen einer pestizid wirksamen Menge einer Verbindung auf die Schädlinge und/oder ihren Ort, dadurch gekennzeichent, daß die Verbindung eine solche gemäß einem der Ansprüche 1 bis 8, wahlweise in Form einer Zusammensetzung nach Anspruch 10 oder 11, ist.

**Revendications**

1. Composé de formule générale (I)

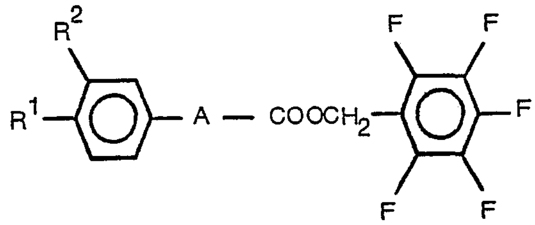

(I)

dans laquelle

$R^1$ est un groupe halogéno ou un groupe alkyle inférieur, alcoxy inférieur ou alkylthio inférieur, chacun d'eux pouvant être substitué par un ou plusieurs groupes halogéno;

$R^2$ est l'hydrogène ou un groupe méthyle; ou bien $R^1$ et $R^2$ pris ensemble forment un groupe méthylènedioxy ou un groupe difluoro méthylènedioxy, ou bien $R^1$ et $R^2$ forment avec les atomes de carbone auxquels ils sont liés un noyau aromatique; et

A est l'un des groupes X et Y

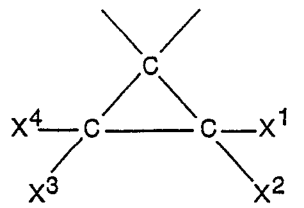

(X)

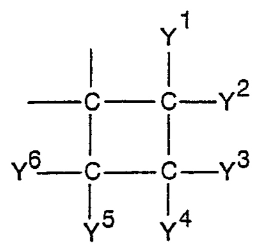

(Y)

dans lesquels

$X^1$ et $X^2$ sont identiques ou différents et représentent chacun un atome d'hydrogène, de fluor, de chlore ou de brome ou un groupe méthyle, avec la condition que, si $X^1$ est un groupe fluoro, $X^2$ ne doit pas être un groupe bromo; et $X^3$ et $X^4$ sont identiques ou différents et représentent chacun un atome d'hydrogène ou de fluor; et $Y^1$, $Y^2$, $Y^3$, $Y^4$, $Y^5$ et $Y^6$ sont identiques ou différents et représentent chacun un atome d'hydrogène, du fluor, de chlore ou de brome ou un groupe méthyle et l'un au moins des groupes $Y^1$ à $Y^6$ est un atome de fluor.

2. Composé selon la revendication 1, caractérisé en ce que l'un au moins des groupes $X^1$ à $X^4$ et $Y^1$ à $Y^6$ est fluoro et les autres sont l'hydrogène ou le fluor.

3. Composé selon la revendication 1, caractérisé en ce que A est le groupe Y et $Y^1$, $Y^2$, $Y^3$ et $Y^4$ sont chacun le fluor et $Y^5$ et $Y^6$ sont l'hydrogène.

4. Composé selon la revendication 1, caractérisé en ce que A est le groupe X, $X^1$ et $X^2$ sont le fluor et $X^3$ et $X^4$ sont l'hydrogène.

5. Composé selon l'une quelconque des revendications 1 à 4, caractérisé en ce que $R^1$ est le chlore ou éthoxy et $R^2$ est l'hydrogène.

6. 1-(4-éthoxyphényl)-2,2,3,3-tétralfluorocyclobutanecarboxylate de 2',3',4',5',6'-pentafluorobenzyle.

7. 1-(4-éthoxyphényl)-2,2-difluorocyclopropanecarboxylate de 2',3',4',5',6'-pentafluorobenzyle.

8. R(-)-1-(4-chlorophényl)-2,2,3,3-tétrafluorocyclobutanecarboxylate de 2',3',4',5',6'-pentafluorobenzyle.

9. Procédé pour la préparation d'un composé selon l'une quelconque des revendications précédentes caractérisé en ce que l'on fait réagir un acide de formule (II)

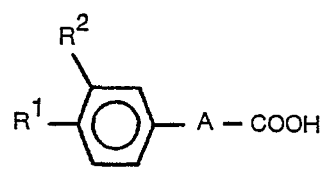

(II)

ou son sel ou dérivé réactif, dans lequel $R^1$, $R^2$ et A sont comme définis à la revendication 1,

(a) avec le bromure de pentafluorobenzyle, de préférence dans un solvant inerte et en présence d'un catalyseur de transfert de phase et d'un sel basique de métal alcalin, le catalyseur étant de préférence un éther en couronne et la réaction ayant lieu de préférence entre un sel de métal alcalin de l'acide de formule (II) et le bromure de pentafluorobenzyle dans un solvant aproptique, ou

(b) avec l'alcool pentafluorobenzylique, de préférence dans un solvant inerte et en présence d'une base comme catalyseur.

10. Composition pesticide, caractérisée en ce qu'elle comprend au moins un composé selon l'une quelconque des revendications 1 à 8 et un support liquide ou solide inerte.

11. Composition pesticide selon la revendication 10, caractérisée en ce qu'elle contient en outre au moins un agent synergique ou potentiateur de la classe des inhibiteurs de microsomeoxydase, de préférence un synergiste de pyréthrine.

12. Procédé pour combattre les parasites, par application aux parasites et/ou à leur emplacement d'une quantité efficace comme pesticide d'un composé, caractérisé en ce que le composé est un composé selon l'une quelconque des revendications 1 à 8, facultativement sous forme d'une composition selon la revendication 10 ou 11.